# EUROPÄISCHE PATENTSCHRIFT

(11) **EP 3 149 350 B1**
(45) Veröffentlichungstag und Bekanntmachung des Hinweises auf die Patenterteilung: **28.07.2021**
(21) Anmeldenummer: 15724961.6
(22) Anmeldetag: 11.05.2015
(51) Int. Cl.: F16D 23/06

(54) **SYNCHRONISIERVORRICHTUNG UND SYNCHRONISATIONSVERFAHREN**
SYNCHRONIZATION DEVICE AND SYNCHRONIZATION METHOD
DISPOSITIF DE SYNCHRONISATION ET PROCÉDÉ DE SYNCHRONISATION

(30) Priorität: 26.05.2014 DE 102014107371
(43) Veröffentlichungstag der Anmeldung: 05.04.2017
(73) Patentinhaber: Hoerbiger Antriebstechnik Holding GmbH, 86956 Schongau (DE)
(72) Erfinder: BACK, Ottmar, 82362 Weilheim (DE); DAMM, Ansgar, 86981 Kinsau (DE)
(74) Vertreter: Prinz & Partner mbB
(86) Internationale Anmeldenummer: PCT/EP2015/060302
(87) Internationale Veröffentlichungsnummer: WO 2015/180949

(56) Entgegenhaltungen:
- CN-A- 102 434 598
- DE-A1-102012 014 830
- DE-A1-102012 216 419
- DE-T2- 69 924 435

## Beschreibung

Die Erfindung betrifft eine Synchronisiervorrichtung und ein Synchronisationsverfahren für ein Schaltgetriebe.

Sperrsynchronisierungen für Schaltgetriebe verfügen normalerweise über eine Sperrgeometrie zum Sperren der Schiebemuffe, solange eine Differenzdrehzahl zwischen der Schiebemuffe und dem Kupplungskörper des zu schaltenden Gangrads besteht. Um das Einfädeln der Schiebemuffe in die Kupplungsverzahnung des Kupplungskörpers zu erleichtern, ist normalerweise eine Einspurgeometrie vorgesehen, die in der Regel durch eine Anspitzung sowohl der Schiebemuffenzähne als auch der Kupplungskörperzähne realisiert ist.

Die gattungsgemäße DE 699 24 435 T2 zeigt eine Synchronisiervorrichtung, bei der die Kupplungskörperzähne und teilweise die Schiebemuffenzähne mit flachen Stirnseiten ausgebildet sind. Um ein sicheres Einspuren zu ermöglichen, stehen einige der Kupplungskörperzähne und der Schiebemuffenzähne in Axialrichtung vor und dienen als Fangzähne.

Die DE 10 2012 216 419 A1 beschreibt eine Synchronisiervorrichtung ohne Synchronring, bei der die Kupplungskörperzähne ohne Einspurschräge ausgebildet sind, wobei die Stirnseiten der Kupplungskörperzähne von der Schiebemuffe weg geneigt sind. Das Fangverhalten der Kupplung wird dadurch verbessert, dass jeder zweite Zahn der Kupplungsverzahnung axial nach vorne übersteht.

Bei modernen automatisierten Schaltgetrieben, insbesondere bei Doppelkupplungsgetrieben, ist man bestrebt, die axiale Baulänge zu reduzieren.

Aufgabe der Erfindung ist es daher, eine Synchronisiervorrichtung für ein Schaltgetriebe zu schaffen, die eine möglichst geringe axiale Baulänge aufweist.

Erfindungsgemäß wird dies mit einer Synchronisiervorrichtung für ein Schaltgetriebe mit den Merkmalen des Anspruchs 1 erreicht. Erfindungsgemäß wird also auf die Anspitzung und die Einspurgeometrie zumindest an der Verzahnung des Kupplungskörpers vollständig verzichtet. Die ansonsten für die Einspurgeometrie mit ihren Schrägflächen und der Anspitzung der Zahnenden zu verwendende axiale Baulänge wird dadurch eingespart.

Die Synchronisiereinheit umfasst einen Synchronring, der eine Außenverzahnung mit Synchronringzähnen aufweist, deren Anordnung auf die Anordnung der Sperrflächen abgestimmt ist. Bei der Synchronisation treffen die Sperrflächen der Schiebemuffenzähne bei der Axialverschiebung der Schiebemuffe auf die Synchronringzähne, die ein axiales Weiterbewegen der Schiebemuffe blockieren, bis ein Drehzahlangleich erreicht ist. Dann kann durch das Gleiten der Sperrflächen an Schrägflächen der Synchronringzähne der Synchronring zurückgestellt und die Schiebemuffe in den Kupplungskörper eingespurt werden.

Das Zahnende der Kupplungskörperzähne kann beispielsweise näherungsweise quaderförmig ausgebildet sein.

Insbesondere können die Stirnflächen der Kupplungskörperzähne im Wesentlichen flach und senkrecht zur Axialrichtung verlaufen.

Es ist möglich, die Ecken und Kanten der Zahnenden zur Erhöhung der Verschleißfestigkeit minimal abzurunden bzw. anzuschrägen, jedoch nicht in dem Maß, dass sie eine herkömmliche Funktion als Einspurhilfe hätten.

Bekannte Einspurschrägen, die als Einspurhilfe eingesetzt werden, sind mit einem relativ kleinen Winkel zur Axialrichtung ausgebildet, um eine möglichst gute Umsetzung einer axialen Krafteinwirkung in eine Umfangsbewegung zu erreichen. Bei symmetrischer Ausbildung der Einspurschrägen werden meist Winkel von ca. 30 - 60° verwendet, wohingegen bei einer asymmetrischen Ausführung auch Winkel kleiner als 30° zum Einsatz kommen. Einspurschrägen erstrecken sich meist in Draufsicht auch über einen großen Abschnitt der Stirnseite eines Zahns, oft über etwa 30 bis 50% der Fläche.

Im Gegensatz dazu sind erfindungsgemäß die Stirnseiten der Kupplungszähne vorzugsweise über wenigstens 60% ihrer Fläche eben oder gegebenenfalls leicht gekrümmt ausgebildet, mit einem Winkel gegenüber der Axialrichtung von über etwa 60°.

Auch die Zahnenden der Schiebemuffenzähne sind möglichst flach und ohne Schrägflächen, die als Einspurhilfe dienen, ausgebildet. Ein Zahnende jedes der Schiebemuffenzähne weist eine Stirnfläche auf, die im Wesentlichen flach und senkrecht zur Axialrichtung verläuft. Die Stirnfläche beträgt beispielsweise wenigstens 50 % der Querschnittsfläche des Schiebemuffenzahns in Axialrichtung gesehen. Auch in diesem Fall ist es natürlich jeweils möglich, Ecken und Kanten abzurunden oder leicht anzuschrägen, beispielsweise um Verschleiß entgegenzuwirken, jedoch müssen keine Einspurhilfen vorgesehen sein.

Es ist also möglich, sowohl die Kupplungskörperzähne als auch die Schiebemuffenzähne ohne Einspurhilfen, insbesondere ohne Einspurschrägen und Anspitzungen auszubilden. Dabei können die Schiebemuffenzähne und die Kupplungskörperzähne als Klauen ausgebildet sein.

Im Prinzip können die Zahnenden von Schiebemuffenzähnen und Kupplungskörperzähnen nach Art einer Klauenkupplung ausgebildet sein. Klauenkupplungen werden in PKW-Schaltgetrieben derzeit nicht verwendet, da die beim Schalten vorliegende Drehzahldifferenz zu Geräuschproblemen und Schlägen beim Lastwechsel führt. Erfindungsgemäß kann dieses Problem durch das Vorsehen der Synchronisiereinheit, die die axiale Bewegung der Schiebemuffe blockiert, bis ein Drehzahlangleich stattgefunden hat, behoben werden.

Zum Zweck der Synchronisierung haben wenigstens einige der Schiebemuffenzähne am Zahnende auf einer Seite eine abgeschrägte Sperrfläche, die von der Stirnfläche ausgeht. In einer bevorzugten Ausführungsform hat jeder Schiebemuffenzahn genau eine Sperrfläche, wobei die Sperrfläche jeweils nur auf einer Seite des Schiebemuffenzahns ausgebildet ist.

Vorzugsweise sind die Sperrflächen an benachbarten Schiebemuffenzähnen auf unterschiedlichen Seiten des Schiebemuffenzahns ausgebildet. Auf diese Weise ergibt sich eine Geometrie, bei der an den Zahnenden bei jeder zweiten zwischen zwei Schiebemuffenzähnen gebildeten Einspurgasse die Zahnwände, die die Einspurgasse bilden, im Wesentlichen in Axialrichtung verlaufen. Bei der jeweils benachbarten liegenden Einspurgasse weisen die einander zugewandten Seiten der Zahnenden der Schiebemuffenzähne jeweils eine abgeschrägte Sperrfläche auf, die gegeneinander geneigt sind, und bei einem Gangwechsel nach oben bzw. nach unten in Kontakt mit den Synchronringzähnen kommen.

Die Einspurgasse ist in ihrer Breite vorteilhaft so auf die Breite der Zahnenden der Kupplungskörperzähne abgestimmt, dass diese so weit wie möglich spielfrei zwischen den Schiebemuffenzähnen aufgenommen werden können. Die spielfreie Aufnahme beginnt direkt beim Einspuren der Kupplungskörperzähne zwischen die Schiebemuffenzähne.

In einer möglichen Ausführungsform dient die Stirnfläche der Kupplungskörperzähne als Endanschlag der Schaltbewegung und kommt in Anlage an an der Schiebemuffenverzahnung ausgebildete Schultern, um den Schaltweg der Schiebemuffe zu begrenzen.

Die Schultern können beispielsweise an gegenüberliegenden Seiten zweier Schiebemuffenzähne ausgebildet sein, insbesondere jeweils auf der der Sperrfläche entgegengesetzten Seite des Schiebemuffenzahns. Die Schultern sind dabei in Axialrichtung um den gewünschten maximalen Einspurweg von der Stirnfläche der Schiebemuffenzähne entfernt platziert.

Vorzugsweise sind jeweils sämtliche Kupplungskörperzähne in Axialrichtung gleich lang ausgebildet. Insbesondere können sämtliche Kupplungskörperzähne identisch ausgebildet sein.

Alternativ oder zusätzlich können auch sämtliche Schiebemuffenzähne in Axialrichtung gleich lang ausgebildet sein.

In einer weiteren möglichen Ausführungsform sind die Zahnenden einiger Schiebemuffenzähne mit einer Stirnfläche ausgebildet, die in Axialrichtung über eine Stirnfläche dazwischenliegender Schiebemuffenzähne hinausragt. Die vorstehenden Zahnenden dienen als Fangklauen, die das Einspuren der Schiebemuffe vereinfachen. Die in Axialrichtung vorstehenden Stirnflächen sind vorzugsweise im Wesentlichen senkrecht zur Axialrichtung ausgerichtet.

Gemäß einer weiteren möglichen Ausführungsform sind die Stirnflächen der Kupplungskörperzähne in einem Winkel von etwa 80 - 89° gegenüber der Axialrichtung geneigt ausgerichtet.

Es ist möglich, die Synchronisiereinheit so auszubilden, dass die Blockierung der Axialbewegung der Schiebemuffe bei Überschreiten einer vorbestimmten Maximalkraft aufgehoben wird. Bei einer derartigen Ausbildung wird im Gegensatz zu herkömmlich bekannten Synchronisiereinheiten ein kraftgesteuertes Einkuppeln der Schiebemuffe in den Kupplungskörper ermöglicht, auch wenn der Drehzahlangleich durch die Synchronisiereinheit noch nicht abgeschlossen ist. Bei Überschreiten der Maximalkraft kann beispielsweise der Synchronring gegen eine Federbeaufschlagung verstellt werden, um ein Weiterbewegen der Schiebemuffe in Axialrichtung zu erlauben.

Aufgabe der Erfindung ist es auch, einen Schaltvorgang mittels einer oben beschriebenen Synchronisiervorrichtung zu optimieren.

Dies wird erfindungsgemäß erreicht, indem eine Drehzahl der Schiebemuffe und des Kupplungskörpers angeglichen werden, eine axiale Kraft der Schiebemuffe gegen den Kupplungskörper aufgebaut wird, eine Drehzahldifferenz zwischen der Schiebemuffe und dem Kupplungskörper hergestellt wird, sodass die Stirnflächen der Schiebemuffenzähne und der Kupplungskörperzähne aneinander entlang gleiten, und die Schiebemuffenzähne zwischen die Kupplungskörperzähne eingespurt werden.

Eine geringe Drehzahldifferenz zwischen der Schiebemuffe und dem Kupplungskörper kann beispielsweise durch das Entsperren nach dem Synchronisieren und/oder durch ein vorhandenes Schleppmoment aufgebaut werden, bevor die Zähne aufeinandertreffen.

Zunächst wird also durch eine Synchronisation die Drehzahl zwischen Schiebemuffe und Kupplungskörper angeglichen. Dabei wird beim Aufbringen der axialen Kraft vorteilhaft direkt ein Einspurversuch unternommen. Liegen jedoch die Stirnflächen der Schiebemuffenzähne nicht über den Lücken der Kupplungskörperzähne, so wird ein Einspuren durch das Aufeinandertreffen der flachen Stirnflächen verhindert. In diesem Fall wird der Aufbau einer geringen Drehzahldifferenz erlaubt oder aktiv gefördert, die eine Relativrotation der Schiebemuffenzähne entlang der Kupplungskörperzähne bewirkt. Auf diese Weise kann bei der passenden Ausrichtung das Einspuren der Schiebemuffenzähne in die Kupplungskörperzähne problemlos ohne nennenswerte Geräuschentwicklung erfolgen. Der Nachteil eines Schaltvorgangs bei einer reinen Klauenkupplung wird durch die Synchronisation und den Drehzahlangleich behoben.

Das Herstellen der Drehzahldifferenz kann beispielsweise durch Ausnützen eines Schleppmoments des Getriebes oder der Kupplung, einer Entspannung des Antriebsstrangs oder auch durch ein spezifisches, insbesondere aktives Ansteuern einer Kupplung erfolgen. Eine geringfügige Drehzahldifferenz ist bereits ausreichend, da sie lediglich eine Relativdrehung um im Wesentlichen eine Zahnbreite eines Schiebemuffenzahns bzw. Kupplungskörperzahns bewirken muss, bis ein erfolgreiches Einspuren möglich ist.

Der Einspurvorgang lässt sich durch eine Steuereinheit überwachen, die bei einem erfolglosen Einspurversuch nach einer vorbestimmten Zeitspanne einen weiteren Einspurversuch veranlasst. Die Steuereinheit kann auch die aufgebrachte axiale Kraft überwachen und/oder steuern, um z.B. den Aufbau einer Relativdrehzahl zwischen Schiebemuffe und Kupplungskörper nicht durch ein zu starkes Aufeinanderpressen der Stirnflächen von Schiebemuffenzähnen und Kupplungskörperzähnen zu verhindern.

Die Erfindung wird nachfolgend anhand mehrerer Ausführungsbeispiele und mit Bezug auf die beigefügten Zeichnungen näher beschrieben. In den Zeichnungen zeigen:
- Figur 1 eine schematische Schnittansicht einer herkömmlichen Synchronisiervorrichtung eines Schaltgetriebes;
- Figur 2 eine schematische perspektivische Ansicht einer herkömmlichen Synchronisiervorrichtung;
- Figur 3 eine schematische Schnittansicht einer herkömmlichen Synchronisiervorrichtung eines Schaltgetriebes;
- Figuren 4 bis 7 die schematische Darstellung eines Einspurvorgangs bei einer erfindungsgemäßen Synchronisiervorrichtung;
- Figur 8 eine schematische Darstellung der Synchronisiervorrichtung aus den Figuren 4 bis 7;
- Figur 9 eine schematische Darstellung einer erfindungsgemäßen Synchronisiervorrichtung in einer zweiten Ausführungsform im komplett eingespurten Zustand;
- Figur 10 eine schematische Darstellung einer erfindungsgemäßen Synchronisiervorrichtung in einer dritten Ausführungsform vor der Synchronisierung;
- Figur 11 eine schematische Darstellung einer erfindungsgemäßen Synchronisiervorrichtung in einer vierten Ausführungsform vor der Synchronisierung;
- Figur 12 eine schematische Darstellung einer erfindungsgemäßen Synchronisiervorrichtung in einer fünften Ausführungsform vor der Synchronisierung;
- Figur 13 eine schematische Darstellung einer Variante einer Synchronisiervorrichtung ,vor der Synchronisierung.

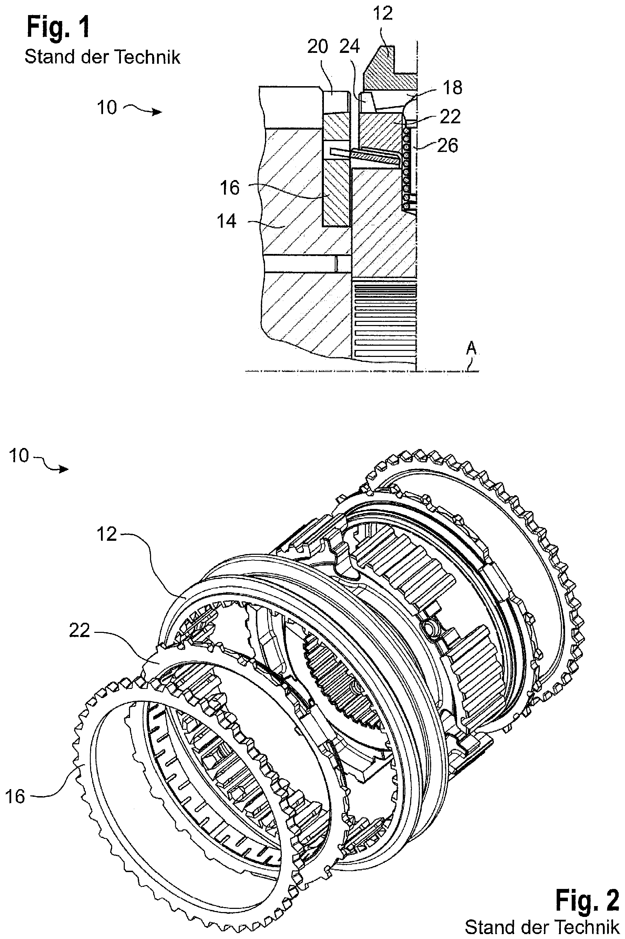

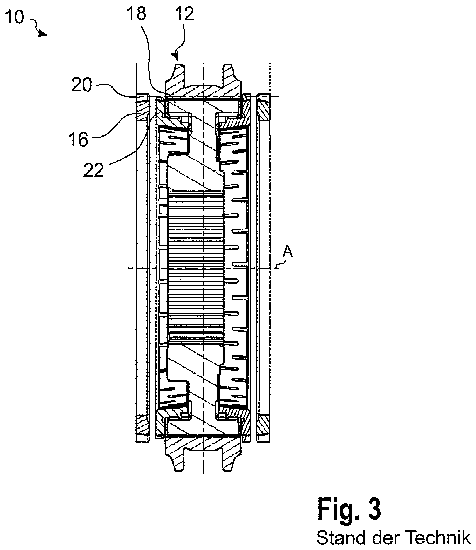

Die Figuren 1 bis 3 zeigen eine bekannte Synchronisiervorrichtung 10 eines Schaltgetriebes, mit einer in Axialrichtung A verschiebbaren Schiebemuffe 12, die drehfest mit einer nicht näher dargestellten Welle rotiert, sowie einem mit einem Gangrad 14 fest verbundenen Kupplungskörper 16. Das Gangrad 14 ist als Losrad auf der Welle aufgesetzt und wird mit dieser über die Schiebemuffe 12 drehfest verbunden.

Die Schiebemuffe 12 weist eine Innenverzahnung mit Schiebemuffenzähnen 18 auf, während der Kupplungskörper 16 eine Außenverzahnung mit Kupplungskörperzähnen 20 besitzt.

Zur Durchführung einer Drehzahlsynchronisierung und eines daran anschließenden Einspurvorgangs, bei dem die Schiebemuffenzähne 18 in die Zwischenräume zwischen den Kupplungskörperzähnen 20 eingespurt werden, ist eine Synchronisiereinheit vorgesehen, die auf bekannte Weise einen Synchronring 22 mit einer Außenverzahnung mit Synchronringzähnen 24 aufweist. Eine in Radialrichtung federbeaufschlagte Kugel dient als Vorsynchronisierungseinheit 26.

Die Funktionsweise einer derartigen Synchronisiervorrichtung 10, beispielsweise nach dem Borg-Warner-System, ist gut bekannt. Zu Beginn der Axialbewegung der Schiebemuffe 12 übt die Vorsynchronisierungseinheit 26 eine Kraft auf den Synchronring 22 in Axialrichtung A aus, wobei der Synchronring 22 in Kontakt mit einer Reibfläche am Kupplungskörper 16 kommt und so bei einem Drehzahlunterschied der Synchronring 22 in Umfangsrichtung verstellt wird. Dadurch werden die Sperrzähne des Synchronrings 22 und der Schiebemuffe 12 in Umfangsrichtung zueinander positioniert, damit die Zähne für die anschließend stattfindende Angleichung der Drehzahlen gesperrt sind. Während der Angleichung der Drehzahlen beim Synchronisationsvorgang blockieren die Synchronringzähne 24 die Schiebemuffe 12, sodass ein Einspuren der Schiebemuffenzähne 18 zwischen die Kupplungskörperzähne 20 verhindert wird. Erst, wenn die Drehzahlen angeglichen sind, kann der Synchronring 22 zurückgestellt werden und ermöglicht das Einspuren in die Kupplungskörperverzahnung.

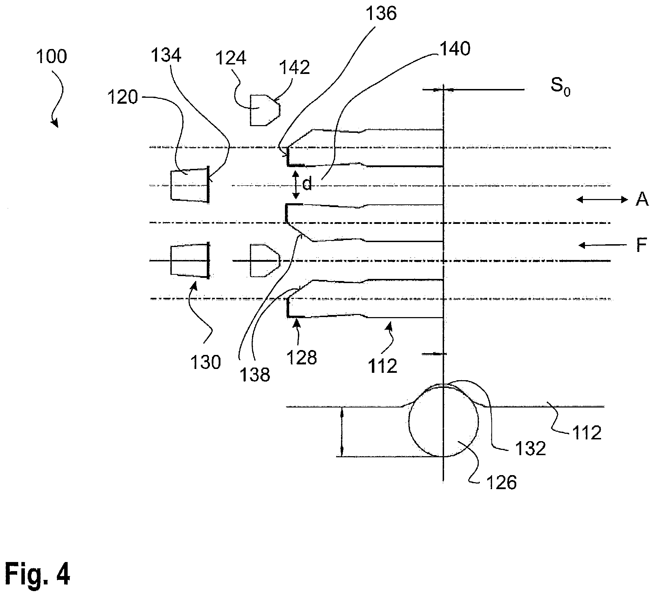

Die Figuren 4 bis 8 zeigen eine erfindungsgemäße Synchronisiervorrichtung 100 gemäß einer ersten Ausführungsform.

Figur 4 zeigt den Zustand vor Beginn des Schaltvorgangs. Die Zahnenden 128 der Zähne 118 der Schiebemuffe 112 sind sowohl von den Synchronringzähnen 124 als auch von den Zahnenden 130 der Kupplungskörperzähne 120 beabstandet.

Wie bei der herkömmlichen Synchronisiervorrichtung 10 dreht sich die Schiebemuffe 112 mit der Welle, während das Gangrad, an dem der Kupplungskörper befestigt ist, lose mitdreht. Die Kugel der Vorsynchronisierungseinheit 126 greift in eine Nut 132 an der Innenseite der Schiebemuffe 112 ein, wie dies in Figur 2 im unteren rechten Bereich angedeutet ist.

Gemäß der Erfindung sind die Stirnflächen 134 aller Kupplungskörperzähne 120 im Wesentlichen flach ausgebildet und verlaufen senkrecht zur Axialrichtung A. Es ist also keine Einspurschräge, d.h. Anspitzung oder Abschrägung als Einspurhilfe vorgesehen. Die Stirnflächen 134 können entweder komplett eben ausgebildet oder z.B. radial nach außen leicht gerundet oder ballig geformt sein, wobei seitliche Kanten und Ecken innerhalb der Herstellungstoleranzen abgerundet oder angeschrägt sein können, z.B. mit einem Radius von 0,5 mm. Alle Kupplungskörperzähne 120 sind hier gleich lang und können generell identisch geformt sein.

Die Stirnflächen 136 aller Schiebemuffenzähne 118 sind ebenfalls im Wesentlichen flach und senkrecht zur Axialrichtung A verlaufend ausgebildet. In einer Draufsicht auf das Zahnende 128 nimmt die Stirnfläche 136 hier in etwa die Hälfte der Querschnittsfläche senkrecht zur Axialrichtung A ein.

Auch die Stirnfläche 136 kann wie die Stirnfläche 134 der Kupplungskörperzähne 120 komplett eben oder radial nach außen leicht abgerundet bzw. ballig ausgebildet sein, wobei auch hier die Ecken und Kanten leicht angeschrägt oder abgerundet ausgebildet sein können.

Alle Schiebemuffenzähne 118 sind in dieser Ausführungsform gleich lang.

An jeweils einer Seite des Schiebemuffenzahns 118 ist eine angeschrägte Sperrfläche 138 ausgebildet, die von der Stirnfläche 136 ausgeht. Die Stirnfläche 136 nimmt jedoch wenigstens 50% der Gesamtfläche der Querschnittsfläche des Schiebemuffenzahns 118 ein.

Die Sperrflächen 138 sind jeweils an einander zugewandten Seiten der Schiebemuffenzähne 118 ausgebildet. Auf diese Weise ist abwechselnd zwischen zwei benachbarten Schiebemuffenzähnen 118 an den Zahnenden 128 eine Einspurgasse 140 gebildet, oder es sind zwei zueinander gerichtete Sperrflächen 138 an den Zahnenden 128 vorgesehen.

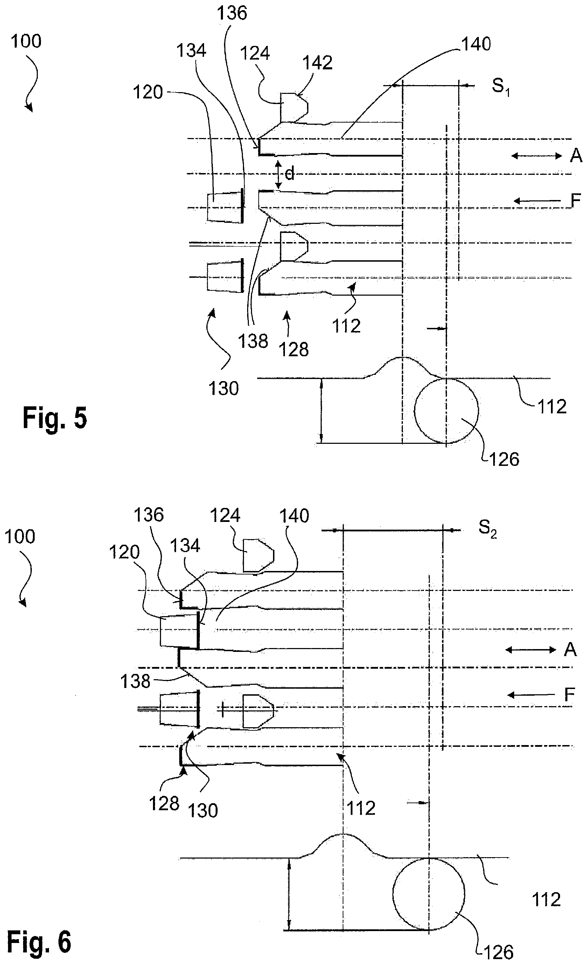

Die Breite d der Einspurgasse 140, also der Abstand der Seitenflächen der Schiebemuffenzähne 118 im Bereich des Zahnendes 128, ist auf den Durchmesser der Stirnfläche 134 der Kupplungskörperzähne 120 abgestimmt und ist hier nur unwesentlich größer als dieser gewählt, sodass im eingespurten Zustand (siehe Figuren 5 und 6) ein möglichst geringes Spiel zwischen den Kupplungskörperzähnen 120 und den benachbarten Schiebemuffenzähnen 118 besteht.

In dem in Figur 4 gezeigten Zustand ist der von der Schiebemuffe 112 zurückgelegte Schaltweg S₀ noch gleich 0. Wird die Schiebemuffe 112 in Axialrichtung A durch eine axiale Kraft F in Richtung zum Kupplungskörper hin verschoben, so wirkt die Vorsynchronisierungseinheit 126 auf den Synchronring 122 ein und drückt diesen auf die Reibfläche des Kupplungskörpers 116. Dadurch wir der Synchronring 122 in seiner Sperrstellung positioniert. Die Schiebemuffenzähne 118 drücken auf die Synchronringzähne 124, und der Drehzahlangleich erfolgt. Sind die Drehzahlen angeglichen, ist ein weiteres axiales Vorschieben der Schiebemuffe 112 in Richtung des Kupplungskörpers 116 möglich. Die Schiebemuffenzähne 118 gleiten dabei in den Zwischenräumen zwischen den Synchronringzähnen 124 entlang, Diese Bewegung wird durch beidseitige Schrägflächen 142 an den Synchronringzähnen 124 unterstützt, die in Kontakt mit den Sperrflächen 138 an den Schiebemuffenzähnen 118 kommen und an diesen entlang gleiten können, um die Synchronringzähne 124 in die Zwischenräume zwischen den Schiebemuffenzähnen 118 zu führen.

Dieser Zustand ist in Figur 5 dargestellt. Die Schiebemuffe 112 hat einen ersten Schaltweg S₁ zurückgelegt. Die Nut 132 in der Schiebemuffe 112 ist über die Kugel der Vorsynchronisierungseinheit 126 hinübergeglitten (dargestellt jeweils im unteren Teil der Figuren 4 bis 7).

Im gezeigten Beispiel treffen die Stirnflächen 134, 136 des Kupplungskörpers und der Schiebemuffe 112 direkt aufeinander, sodass ein Einspuren der Kupplungskörperzähne120 in die Einspurgassen 140 zwischen den Schiebemuffenzähnen 118 nicht möglich ist.

In diesem Fall muss erneut eine geringe Drehzahldifferenz zwischen dem Kupplungskörper und der Schiebemuffe 112 aufgebaut werden. Die Drehzahldifferenz kann minimal sein, da lediglich ein Versatz in Umfangsrichtung erzeugt werden muss, der dafür sorgt, dass die Stirnflächen 134 der Kupplungskörperzähne 120 auf die Einspurgassen 140 zwischen den Schiebemuffenzähnen 118 treffen.

Die Drehzahldifferenz kann beispielsweise durch einfaches Abwarten einer vorbestimmten Zeitspanne erreicht werden, wobei etwa das Schleppmoment des Getriebes oder eine Entspannung des Antriebes ausgenutzt werden kann, die in der Freiflugphase zwangsläufig eine Drehzahldifferenz bewirken, wenn der Kontakt zwischen dem Synchronring und der Reibfläche des Kupplungskörpers aufgehoben wird. Es ist natürlich auch möglich, gezielt eine Kupplung anzusteuern oder eine Steuerung vorzusehen, die die Drehzahldifferenz erzeugt (nicht dargestellt).

Ist die gewünschte Stellung erreicht, wie dies in Figur 6 dargestellt ist, kann die Schiebemuffe 112 durch weiteres Aufbringen der axialen Kraft F auf den Kupplungskörper 116 aufgeschoben werden, wobei die Schiebemuffenzähne 118 zwischen die Kupplungskörperzähne 120 eingespurt werden und die Stirnflächen 134 der Kupplungskörperzähne 120 zwischen den Schiebemuffenzähnen 118 zu liegen kommen. Dieses Einspuren erfolgt bei einem Schaltweg der Schiebemuffe S₂.

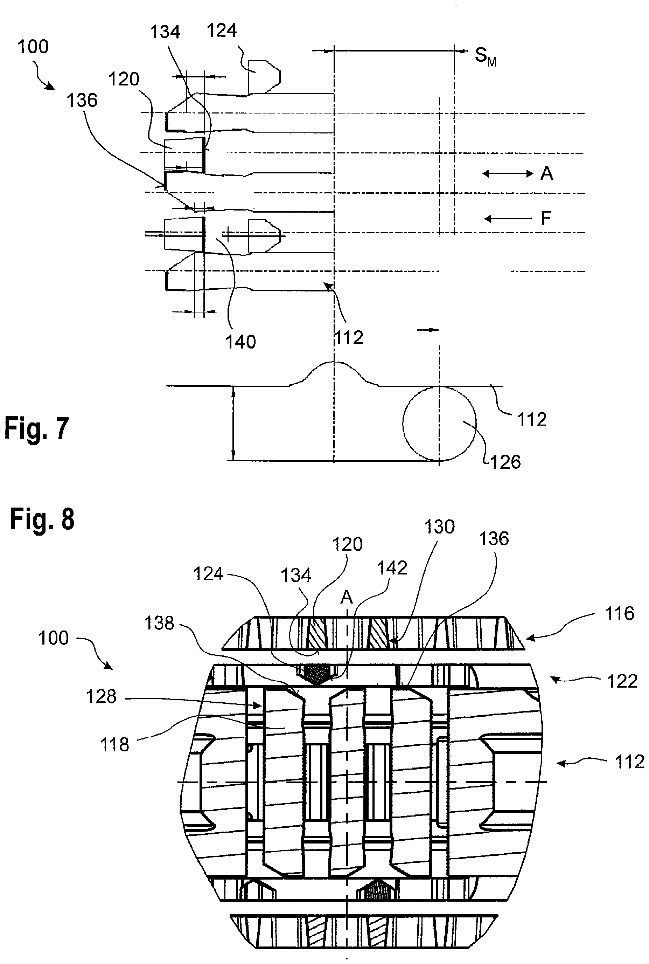

Der komplett eingespurte Zustand ist in Figur 7 gezeigt, wenn der maximale Schaltweg S_{M} zurückgelegt wurde. Die Kupplungskörperzähne 120 liegen nun in ihrer maximalen Einschubtiefe zwischen den Schiebemuffenzähnen 118.

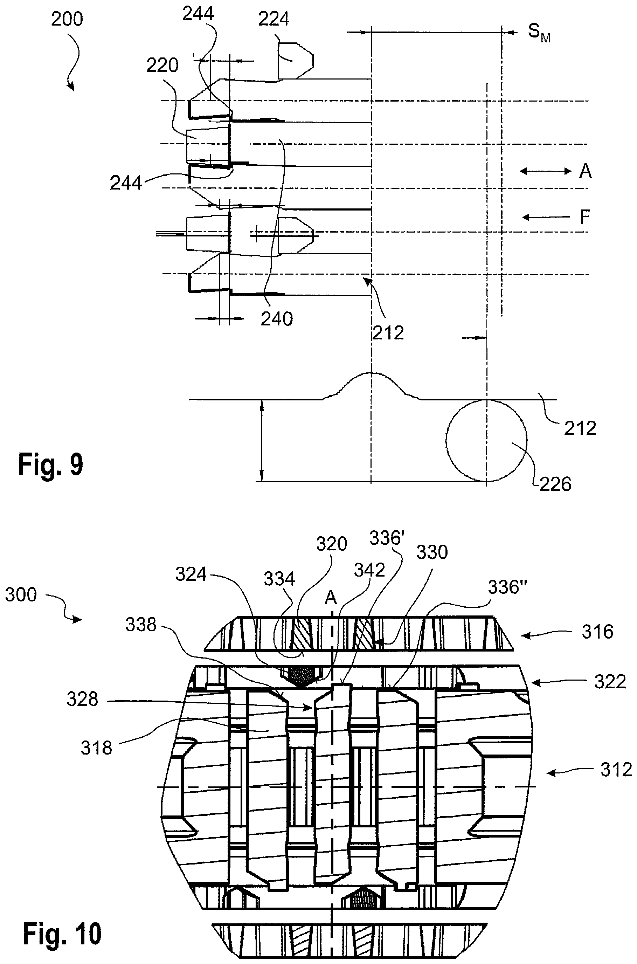

Figur 9 zeigt eine zweite Ausführungsform einer Synchronisiervorrichtung 200, bei der an jedem Schiebemuffenzahn 218 an der der Sperrfläche 138 abgewandten Seite eine Schulter 244 ausgebildet ist, die als Anschlagfläche für die Stirnfläche 234 der Kupplungskörperzähne 220 bei maximalem Schaltweg S_{M} dient. In diesem Beispiel kommt jeder zweite Kupplungskörperzahn 220 in Kontakt mit zwei Schultern 244, die ihn auf gegenüberliegenden Seiten abstützen. Die restliche Ausführung ist identisch zu der der ersten Ausführungsform.

Bezugszeichen für prinzipiell bereits aus der vorherigen Ausführungsformen bekannte Bauteile sind jeweils um 100 erhöht. Dies gilt auch für die im Folgenden beschriebenen weiteren Ausführungsformen.

Figur 10 zeigt eine dritte Ausführungsform einer Synchronisiervorrichtung 300. Im Gegensatz zur ersten Ausführungsform sind die Zahnenden 328 jedes zweiten Schiebemuffenzahns 318 der Schiebemuffe 312 über etwa die Hälfte ihres Querschnitts mit einer Stirnfläche 336' ausgebildet, die in Axialrichtung A über die Stirnfläche 136" der dazwischenliegenden Schiebemuffenzähne 318 um wenige Millimeter hinausragt. Die Stirnfläche 336' verläuft hier im Wesentlichen senkrecht zur Axialrichtung A.

Auf diese Weise bildet der vorstehende Abschnitt des Schiebemuffenzahns 318 eine Fangklaue, die das Einspuren zwischen die Kupplungskörperzähne 320 des Kupplungskörpers 316 vereinfacht.

Die Sperrflächen 338 an den Schiebemuffenzähnen 318 mit den hervorstehenden Stirnflächen 136' beginnen auf gleicher axialer Höhe wie die Sperrflächen 338 an den restlichen Schiebemuffenzähnen 318.

Der Kupplungskörper 316 und der Synchronring 322 sind identisch zur ersten Ausführungsform ausgebildet.

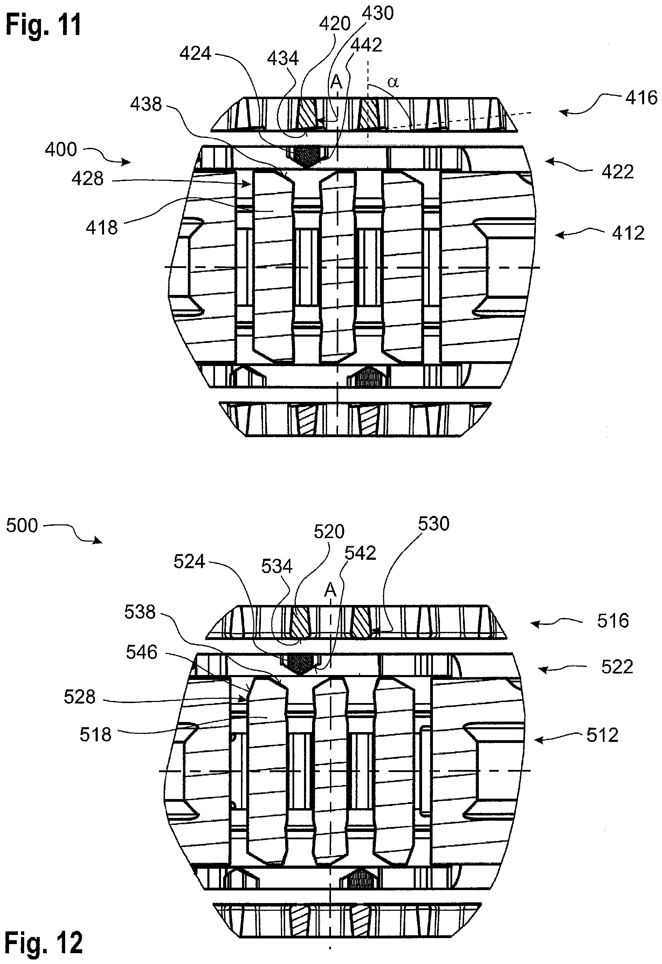

Figur 11 zeigt eine vierte Ausführungsform einer Synchronisiervorrichtung 400. Hier ist die Stirnfläche 434 jedes der Kupplungskörperzähne 420 eben ausgebildet, aber in einem Winkel α von etwa 80 - 89° gegenüber der Axialrichtung A geneigt ausgerichtet. Der Winkel α beträgt insbesondere zwischen 84 - 89°. Im gezeigten Beispiel sind alle Stirnflächen 434 in dieselbe Richtung bezüglich der Umfangsrichtung geneigt.

Die Schiebemuffe 412 und der Synchronring 422 sind hier wie in der ersten Ausführungsform ausgebildet.

Figur 12 zeigt eine fünfte Ausführungsform einer Synchronisiervorrichtung 500 Hier sind die Stirnflächen 534 aller Kupplungskörperzähne 520 leicht ballig gestaltet, sodass ihre Außenkontur abgerundet ist und die Stirnfläche 534 wenigstens abschnittsweise gekrümmt verläuft. Die Krümmungen bleiben jedoch unter einem Winkel von etwa 60° gegenüber der Axialrichtung A und dienen nicht als Einspurhilfe, sondern lediglich der Verschleißverringerung.

Die Zahnenden 528 der Schiebemuffenzähne 518 weisen hier an der der Sperrfläche 538 abgewandten Seite jeweils eine Schrägfläche 546 auf, die in einem kleineren Winkel zur Axialrichtung verläuft als die Sperrfläche 538. Zwischen der Sperrfläche 538 und der Schrägfläche 546 ist eine senkrecht zur Axialrichtung A ausgerichtete Stirnfläche 536 vorgesehen.

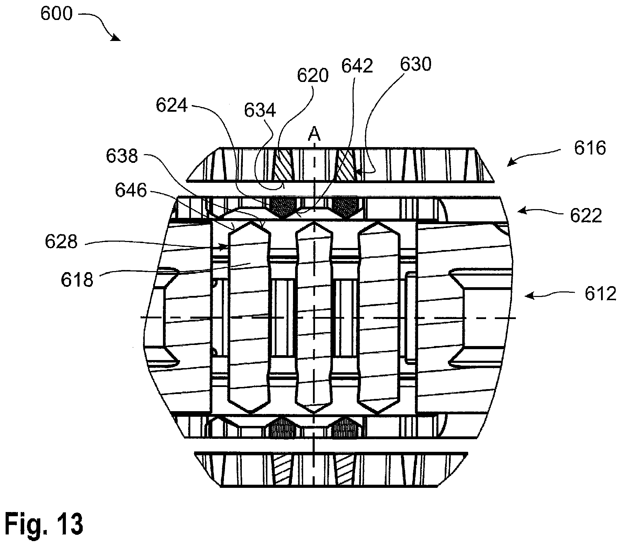

Die Figur 13 zeigt eine Variante einer Synchronisiervorrichtung 600, bei der die Schiebemuffenzähne 618 angespitzt ausgebildet sind. Die Schrägflächen 646 schließen dabei direkt an die Sperrflächen 638 an. In diesem Beispiel ist der Neigungswinkel der Schrägflächen 646 in etwa so groß gewählt wie der der Sperrflächen 638.

Die Schrägflächen 646 dienen hier ebenfalls als Sperrflächen für den Synchronring 622, wobei dieser mit der doppelten Anzahl an Synchronringzähnen 624 wie in der ersten Ausführungsformen versehen ist.

Die Zahnenden 630 der Kupplungskörperzähne 620 sind hier so ausgebildet wie in der ersten Ausführungsform.

Die Merkmale der einzelnen beschriebenen Ausführungsformen können im Ermessen des Fachmanns frei miteinander kombiniert oder gegeneinander ausgetauscht werden.

Bei den beschriebenen Synchronisiervorrichtungen 100 - 600 ist die Sperrfunktion von der Einspurfunktion getrennt. Zum Sperren werden, wie herkömmlich bekannt, die Sperrflächen 138 zwischen den Schiebemuffenzähnen 118 - 618 und den Synchronringzähnen 124 verwendet. Es wird jedoch zumindest weitgehend auf eine Einspurgeometrie mit einer Anspitzung der Schiebemuffenzähne 118 - 418 und vollständig auf eine Anspitzung der Kupplungskörperzähne 120 - 620 am Kupplungskörper 116 - 616 verzichtet, und es können sowohl die Kupplungskörperzähne 120 - 620 als auch die Schiebemuffenzähne 118 - 518 im Wesentlichen als Klauen ausgeführt werden.

Bei einer gegenüber einer herkömmlichen Synchronisiervorrichtung 10 gleichbleibenden Überdeckung im geschalteten Zustand lässt sich so der axiale Einbauraum um etwa 2 mm reduzieren. Dies ergibt bei typischen Getriebe-Layouts eine Reduzierung der Gesamtgetriebelänge von bis zu 8 mm.

Um den durch die Anspitzung eingesparten axialen Bauraum reduziert sich auch der Schaltweg S_{M} der Schiebemuffe 112 - 612. Alternativ könnte auf diese Weise bei gleichbleibendem axialen Einbauraum eine größere Überdeckung der Verzahnungen von Schiebemuffe 112 - 612 und Kupplungskörper 116 - 616 erreicht werden.

## Patentansprüche

1. Synchronisiervorrichtung für ein Schaltgetriebe, mit einer Schiebemuffe (112 - 512), die eine Innenverzahnung mit einer Vielzahl von Schiebemuffenzähnen (118 - 518) aufweist, die eine Stirnfläche (136 - 536) aufweisen, die im Wesentlichen flach und senkrecht zur Axialrichtung (A) verläuft, und einem Kupplungskörper eines Gangrads, der eine Außenverzahnung mit einer Vielzahl von Kupplungskörperzähnen (120 - 520) hat, in die die Innenverzahnung der Schiebemuffe (112 - 512) eingreifen kann, sowie einer Synchronisiereinheit mit einem Synchronring (122 - 522), der eine Außenverzahnung mit Synchronringzähnen (124 - 524) aufweist, wobei die Synchronisiereinheit eine axiale Bewegung der Schiebemuffe (112 - 512) blockieren kann, wobei die Kupplungskörperzähne (120 - 520) an ihrem den Schiebemuffenzähnen (118 - 518) nahen axialen Zahnende (130 - 530) ohne Einspurschräge ausgebildet sind, **dadurch gekennzeichnet, dass** jeder der Schiebemuffenzähne (118 - 518) eine Stirnfläche (136 - 536) aufweist, die im Wesentlichen flach und senkrecht zur Axialrichtung (A) verläuft, und dass wenigstens einige der Schiebemuffenzähne (118 - 518) am Zahnende (128 - 528) auf einer Seite eine abgeschrägte Sperrfläche (138 - 538) aufweisen, die von der Stirnfläche (136 - 536) ausgeht und die Anordnung der Synchronringzähne (124 - 524) auf die Anordnung der Sperrflächen (138 - 538) abgestimmt ist.

2. Synchronisiervorrichtung nach Anspruch 1, **dadurch gekennzeichnet, dass** die Schiebemuffenzähne (118 -518) und die Kupplungskörperzähne (120 - 620) als Klauen ausgebildet sind.

3. Synchronisiervorrichtung nach einem der vorhergehenden Ansprüche, **dadurch gekennzeichnet, dass** die Stirnfläche (136 - 536) der Schiebemuffenzähne (118 - 518) wenigstens 50% der Querschnittsfläche des Schiebemuffenzahns (118 - 518) beträgt.

4. Synchronisiervorrichtung nach einem der vorhergehenden Ansprüche, **dadurch gekennzeichnet, dass** wenigstens einige der Schiebemuffenzähne (118 - 618) am Zahnende (128 - 628) auf genau einer Seite eine abgeschrägte Sperrfläche (138 - 638) aufweisen, die von der Stirnfläche (136 - 636) ausgeht.

5. Synchronisiervorrichtung nach einem der vorhergehenden Ansprüche, **dadurch gekennzeichnet, dass** die Sperrflächen (138 - 638) an benachbarten Schiebemuffenzähnen (118 - 618) auf unterschiedlichen Seiten des Schiebemuffenzahns (118 - 618) ausgebildet sind und/oder dass die Schiebemuffenzähne (218) auf der der Sperrfläche (238) entgegengesetzten Seite eine Schulter (244) haben.

6. Synchronisiervorrichtung nach einem der vorhergehenden Ansprüche, **dadurch gekennzeichnet, dass** die Synchronisiereinheit so ausgebildet ist, dass die Blockierung der Axialbewegung der Schiebemuffe (112 - 612) bei Überschreiten einer vorbestimmten Maximalkraft aufgehoben wird.

7. Synchronisiervorrichtung nach einem der vorhergehenden Ansprüche, **dadurch gekennzeichnet, dass** sämtliche Kupplungskörperzähne (120 - 620) identisch ausgebildet sind, zumindest dass sämtliche Kupplungskörperzähne (120 - 620) in Axialrichtung (A) gleich lang sind.

8. Synchronisiervorrichtung nach einem der vorhergehenden Ansprüche, **dadurch gekennzeichnet, dass** sämtliche Schiebemuffenzähne (118; 218; 418; 518; 618) in Axialrichtung (A) gleich lang sind.

9. Synchronisiervorrichtung nach einem der Ansprüche 1 bis 7, **dadurch gekennzeichnet, dass** die Zahnenden (328) einiger Schiebemuffenzähne (318) mit einer Stirnfläche (336') ausgebildet sind, die in Axialrichtung (A) über eine Stirnfläche (136") dazwischenliegender Schiebemuffenzähne (318) hinausragt.

10. Synchronisiervorrichtung nach einem der vorhergehenden Ansprüche, **dadurch gekennzeichnet, dass** die Stirnflächen (434) der Kupplungskörperzähne (420) in einem Winkel (α) von etwa 80 - 89° gegenüber der Axialrichtung (A) geneigt ausgerichtet sind.

11. Synchronisationsverfahren zum Schalten eines Getriebes mit einer Synchronisiervorrichtung nach einem der vorhergehenden Ansprüche, mit den Schritten:
- Angleichen der Drehzahl der Schiebemuffe (112 - 618) und des Kupplungskörpers (116 - 616),
- Aufbau einer axialen Kraft (F) der Schiebemuffe gegen den Kupplungskörper (116-616),
- Herstellen einer Drehzahldifferenz zwischen der Schiebemuffe (112 - 612) und dem Kupplungskörper (116 - 616), sodass die Stirnflächen (136 - 636, 134 - 634) der Schiebemuffenzähne (118 - 618) und der Kupplungskörperzähne (120 - 620) aneinander entlang gleiten, und
- Einspuren der Schiebemuffenzähne (118 - 618) zwischen die Kupplungskörperzähne (120 - 620).

12. Synchronisationsverfahren nach Anspruch 11, **dadurch gekennzeichnet, dass** das Herstellen der Drehzahldifferenz durch Ausnützen eines Schleppmoments des Getriebes, eines Schleppmoments einer Kupplung, einer Entspannung des Antriebsstrangs oder ein spezifisches Ansteuern einer Kupplung erfolgt.

13. Synchronisationsverfahren nach einem der Ansprüche 11 und 12, **dadurch gekennzeichnet, dass** der Einspurvorgang durch eine Steuereinheit überwacht wird, die bei einem erfolglosen Einspurversuch nach einer vorbestimmten Zeitspanne einen weiteren Einspurversuch veranlasst.

## Claims

1. A synchronizing device for a manual transmission, comprising a sliding sleeve (112 - 512) which includes an internal toothing with a plurality of sliding sleeve teeth (118 - 518) having an end face (136 - 536) that extends substantially flat and perpendicular to the axial direction (A), and a clutch body of a speed change gear, which has an external toothing with a plurality of clutch body teeth (120 - 520) into which the internal toothing of the sliding sleeve (112 - 512) can engage, and a synchronizing unit having a synchronizer ring (122 - 522) which includes an external toothing with synchronizer ring teeth (124 - 524), the synchronizing unit being adapted to block an axial movement of the sliding sleeve (112 - 512), wherein the clutch body teeth (120 - 520) are formed without a meshing bevel at their axial tooth end (130 - 530) close to the sliding sleeve teeth (118 - 518), **characterized in that** each of the sliding sleeve teeth (118 - 518) includes an end face (136 - 536) which extends substantially flat and perpendicular to the axial direction (A), and **in that** at the tooth end (128 - 528) on one side, at least some of the sliding sleeve teeth (118 - 518) have a beveled blocking surface (138 - 538) which proceeds from the end face (136 - 536), and **in that** the arrangement of the synchronizer ring teeth (124 - 524) is adjusted to the arrangement of the blocking surfaces (138 - 538).

2. The synchronizing device according to claim 1, **characterized in that** the sliding sleeve teeth (118 - 518) and the clutch body teeth (120 - 620) are formed as claws.

3. The synchronizing device according to either of the preceding claims, **characterized in that** the end face (136 - 536) of each sliding sleeve tooth (118 - 518) amounts to at least 50% of the cross-sectional area of the sliding sleeve tooth (118-518).

4. The synchronizing device according to any of the preceding claims, **characterized in that** at the tooth end (128 - 628), on exactly one side, at least some of the sliding sleeve teeth (118 - 618) have a beveled blocking surface (138 - 638) which proceeds from the end face (136 - 636).

5. The synchronizing device according to any of the preceding claims, **characterized in that** the blocking surfaces (138 - 638) on neighboring sliding sleeve teeth (118 - 618) are formed on different sides of the sliding sleeve tooth (118 - 618), and/or **in that** the sliding sleeve teeth (218) have a shoulder (244) on the side opposite to the blocking surface (238).

6. The synchronizing device according to any of the preceding claims, **characterized in that** the synchronizing unit is formed such that blocking of the axial movement of the sliding sleeve (112 - 612) is overridden upon exceedance of a predetermined maximum force.

7. The synchronizing device according to any of the preceding claims, **characterized in that** all clutch body teeth (120 - 620) are formed to be identical, at least that all clutch body teeth (120 - 620) have the same length in the axial direction (A).

8. The synchronizing device according to any of the preceding claims, **characterized in that** all sliding sleeve teeth (118; 218; 418; 518; 618) have the same length in the axial direction (A).

9. The synchronizing device according to any of claims 1 to 7, **characterized in that** the tooth ends (328) of some sliding sleeve teeth (318) are formed with an end face (336') which protrudes in the axial direction (A) beyond an end face (136") of intermediate sliding sleeve teeth (318).

10. The synchronizing device according to any of the preceding claims, **characterized in that** the end faces (434) of the clutch body teeth (420) are oriented to be inclined at an angle (α) of about 80 - 89° with respect to the axial direction (A).

11. A synchronization method for shifting a transmission with a synchronizing device according to any of the preceding claims, comprising the steps of:
- matching the speed of the sliding sleeve (112 - 618) and of the clutch body (116-616),
- build-up of an axial force (F) of the sliding sleeve against the clutch body (116 - 616),
- producing a speed difference between the sliding sleeve (112 - 612) and the clutch body (116 - 616), so that the end faces (136 - 636, 134 - 634) of the sliding sleeve teeth (118 - 618) and the clutch body teeth (120 - 620) slide along each other, and
- causing the sliding sleeve teeth (118 - 618) to mesh with the clutch body teeth (120 - 620).

12. The synchronization method according to claim 11, **characterized in that** producing the speed difference is effected by utilizing a drag torque of the transmission, a drag torque of a clutch, a relaxation of the drive train or a specific actuation of a clutch.

13. The synchronization method according to either of claims 11 and 12, **characterized in that** the meshing operation is monitored by a control unit which in the case of an unsuccessful meshing attempt prompts a further meshing attempt after a predetermined time interval.

## Revendications

1. Dispositif de synchronisation pour boîte de vitesses, comprenant un baladeur (112-512) qui présente une denture intérieure avec une pluralité de dents de baladeur (118-518) présentant une face frontale (136-536) qui s'étend de manière sensiblement plane et perpendiculaire au sens axial (A), et un corps d'embrayage d'un pignon de vitesse qui présente une denture extérieure avec une pluralité de dents de corps d'embrayage (120-520) dans laquelle la denture intérieure du baladeur (112-512) peut s'engager, et une unité de synchronisation comprenant une bague de synchronisation (122-522) qui présente une denture extérieure avec des dents de bague de synchronisation (124-524), l'unité de synchronisation étant apte à bloquer un mouvement axial du baladeur (112-512), les dents de corps d'embrayage (120-520) étant réalisées sans chanfrein d'engrènement à leur extrémité de dent (130-530) axiale proche des dents de baladeur (118-518), **caractérisé en ce que** chacune des dents de baladeur (118-518) présente une face frontale (136-536) qui s'étend de manière sensiblement plane et perpendiculaire au sens axial (A), et **en ce qu'**au moins certaines des dents de baladeur (118-518) présentent d'un côté, à l'extrémité de dent (128-528), une surface de blocage (138-538) chanfreinée qui s'étend à partir de la face frontale (136-536), et **en ce que** l'agencement des dents de bague de synchronisation (124-524) est adapté à l'agencement des surfaces de blocage (138-538).

2. Dispositif de synchronisation selon la revendication 1, **caractérisé en ce que** les dents de baladeur (118-518) et les dents de corps d'embrayage (120-620) sont réalisées sous forme de crabots.

3. Dispositif de synchronisation selon l'une des revendications précédentes, **caractérisé en ce que** la face frontale (136-536) des dents de baladeur (118-518) représente au moins 50% de la surface de section transversale de la dent de baladeur (118-518).

4. Dispositif de synchronisation selon l'une des revendications précédentes, **caractérisé en ce qu'**au moins certaines des dents de baladeur (118-618) présentent exactement d'un côté, à l'extrémité de dent (128-628), une surface de blocage chanfreinée (138-638) qui s'étend à partir de la face frontale (136-636).

5. Dispositif de synchronisation selon l'une des revendications précédentes, **caractérisé en ce que** les surfaces de blocage (138-638) sont réalisées sur des dents de baladeur (118-618) adjacentes de différents côtés de la dent de baladeur (118-618) et/ou **en ce que** les dents de baladeur (218) présentent un épaulement (244) du coté opposé à la surface de blocage (238).

6. Dispositif de synchronisation selon l'une des revendications précédentes, **caractérisé en ce que** l'unité de synchronisation est réalisée de telle sorte que le blocage du mouvement axial du baladeur (112-612) est annulé lors du dépassement d'une force maximale prédéterminée.

7. Dispositif de synchronisation selon l'une des revendications précédentes, **caractérisé en ce que** toutes les dents de corps d'embrayage (120-620) sont réalisées identiques, au moins **en ce que** toutes les dents de corps d'embrayage (120-620) ont la même longueur dans le sens axial (A).

8. Dispositif de synchronisation selon l'une des revendications précédentes, **caractérisé en ce que** toutes les dents de baladeur (118; 218; 418; 518; 618) ont la même longueur dans le sens axial (A).

9. Dispositif de synchronisation selon l'une des revendications 1 à 7, **caractérisé en ce que** les extrémités de dent (328) de plusieurs dents de baladeur (318) sont réalisées avec une face frontale (336') qui, dans le sens axial (A), fait saillie au-delà d'une face frontale (136") de dents de baladeur (318) intermédiaires.

10. Dispositif de synchronisation selon l'une des revendications précédentes, **caractérisé en ce que** les faces frontales (434) des dents de corps d'embrayage (420) sont orientées inclinées selon un angle (α) d'environ 80-89° par rapport au sens axial (A).

11. Procédé de synchronisation pour le changement de rapport d'une boîte de vitesses présentant un dispositif de synchronisation selon l'une des revendications précédentes, comprenant les étapes suivantes:
- assimilation de la vitesse de rotation du baladeur (112-618) et du corps d'embrayage (116-616),
- établissement d'une force axiale (F) du baladeur contre le corps d'embrayage (116-616),
- réalisation d'une différence de vitesse de rotation entre le baladeur (112-612) et le corps d'embrayage (116-616) de sorte que les faces frontales (136-636, 134-634) des dents de baladeur (118-618) et des dents de corps d'embrayage (120-620) glissent le long les unes des autres, et
- engrènement des dents de baladeur (118-618) entre les dents de corps d'embrayage (120-620).

12. Procédé de synchronisation selon la revendication 11, **caractérisé en ce que** l'établissement de la différence de vitesse de rotation est réalisé par l'utilisation d'un couple résistant de la boîte de vitesses, d'un couple résistant d'un embrayage, d'une relaxation du groupe motopropulseur ou d'une activation d'un embrayage.

13. Procédé de synchronisation selon l'une des revendications 11 et 12, **caractérisé en ce que** la procédure d'engrènement est surveillée par une unité de commande qui, lors d'une tentative d'engrènement infructueuse, provoque une autre tentative d'engrènement après un intervalle de temps prédéterminé.
